# EUROPÄISCHE PATENTSCHRIFT

(11) **EP 2 186 727 B1**
(45) Veröffentlichungstag und Bekanntmachung des Hinweises auf die Patenterteilung: **25.05.2016**
(21) Anmeldenummer: 09014309.0
(22) Anmeldetag: 16.11.2009
(51) Int. Cl.: B64C 27/82

(54) **Heckrotorsystem sowie Verfahren zur Steuerung eines Heckrotorsystems**
Tail rotor system and method for controlling a tail rotor system
Système de rotor arrière et procédé de commande d'un système de rotor arrière

(30) Priorität: 17.11.2008 DE 102008057715
(43) Veröffentlichungstag der Anmeldung: 19.05.2010
(73) Patentinhaber: Liebherr-Aerospace Lindenberg GmbH, 88161 Lindenberg/Allgäu (DE)
(72) Erfinder: Buhl, Andreas, 87534 Oberstaufen (DE); Koros, Michael, 88161 Lindenberg (DE)
(74) Vertreter: Laufhütte, Dieter

(56) Entgegenhaltungen:
- WO-A1-2007/080617
- GB-A- 589 760
- GB-A- 1 455 816
- US-A- 4 554 989

## Beschreibung

Die vorliegende Erfindung betrifft ein Heckrotorsystem für ein Luftfahrzeug, insbesondere für einen Helikopter, mit einem mehrblättrigen Heckrotor mit festem Blattanstellwinkel sowie ein Verfahren zur Steuerung eines Heckrotorsystems für ein Luftfahrzeug, insbesondere für einen Helikopter.

Üblicherweise weisen Hubschrauber als Hauptantrieb Einrotorsysteme auf, wobei um die Achse des Hauptrotors ein Drehmoment bzw. Giermoment entsteht, das eine der Rotordrehung entgegengesetzte Drehung des Hubschraubers bewirkt. Um dem entgegenzuwirken, werden zum Drehmomentausgleich und zur Giersteuerung üblicherweise entweder ein koaxialer Hauptrotor, ein Tandemhauptrotor oder ineinander kämmende Hauptrotoren verwendet. Alternativ werden bei klassischen Haupt- und Heckrotorkonfigurationen zum Drehmomentausgleich und zur Giersteuerung eine Luftstromablenkung im Heckausleger und/oder eine Konfiguration mit Haupt- und Heckrotor vorgesehen.

Dabei ist der Heckrotor über einen mechanischen Wellenstrang fest mit dem Hauptgetriebe verbunden und hierdurch mechanisch angetrieben. Der Heckrotorblatt-Anstellwinkel wird über einen Stellantrieb verändert.

Somit werden konventionell angetriebene Heckrotoren mit fester Drehzahl mittels Wellen vom Hauptgetriebe und variabler Blattverstellung mittels Stellantrieben zum Drehmomentausgleich und zur Giersteuerung eines Helikopters benutzt. Dabei sind die Wellen und Getriebe zum Heckrotor und der Lastpfad im Stellantrieb nur einfach aus Gewichtsgründen ausgeführt.

Ein weiteres Problem herkömmlicher Hauptrotor-/Heckrotorsysteme ist der Umstand, dass der Heckrotor bis zu ca. 20% der Motorleistung des Hauptantriebs benötigt und darüber hinaus überproportional an der Lärmentwicklung des Helikopters Anteil hat.

In Bezug auf die vorgenannten Probleme wurden bereits im Stand der Technik Lösungsansätze vorgeschlagen, die jedoch den vorgenannten Problemen nur teilweise gerecht werden.

Aus der EP 0 680 871 B1 ist ein gekapselter Heckrotor bekannt, wobei durch Kapselung und Phasenmodulation der Rotorblattverstellung einerseits das Unfallrisiko durch den Heckrotor verringert und zugleich die Lärmentwicklung reduziert werden soll. Der Heckrotor wird dabei mit seiner Motorwelle angetrieben, die ihrerseits ausgehend von einer den Heckausleger durchlaufenden Antriebswelle angetrieben wird und mit einem Nebenaustritt des Hauptgetriebes des Hubschraubers verbunden ist.

Die US 4,953,811 betrifft ein gekapseltes, selbst angetriebenes Heckrotorsystem, bei dem der Heckrotor magnetisch angetrieben wird. Die Magnete befinden sich dabei umlaufend in der Heckrotorkapselung, so dass die magnetischen Heckrotorblätter durch Änderung des Magnetfelds angetrieben werden können.

Darüber hinaus ist der WO 2007/080617 A1 ein Heckrotorsystem mit einem mehrblättrigen Heckrotor mit festem Blattanstellwinkel zu entnehmen, der durch einen mit dem Hauptantriebssystem des Hubschraubers verbundenen hydraulischen Antrieb angetrieben wird.

Ein weiterer Helikopter mit Heckrotor ist aus der GB 1 455 816 A1 bekannt. Der Heckrotor wird über einen Hydraulikmotor angetrieben, wobei das Gierausgleichsmoment über den Anstellwinkel der Rotorblätter des Heckrotors eingestellt wird.

Weitere Helikopter bzw. Heckrotorsysteme sind aus der GB 589 760 A sowie der US 4, 554, 989 A1 bekannt.

Keine der vorstehenden Lösungen ist jedoch in der Lage, sämtliche vorstehend ausgezeigten Probleme von Hauptrotor-/Heckrotorkonfigurationen zu lösen.

Es ist daher die Aufgabe der vorliegenden Erfindung, ein Heckrotorsystem für ein Luftfahrzeug der eingangs genannten Art in vorteilhafter Weise weiterzubilden, insbesondere dahingehend, dass es effizienter, sicherer und kostengünstiger sowie vor allem durch Reduzierung der Komponenten-Kritikalität hergestellt und betrieben werden kann.

Diese Aufgabe wird erfindungsgemäß durch ein Heckrotorsystem mit den Merkmalen des Anspruchs 1 gelöst. Danach ist vorgesehen, dass das Heckrotorsystem für ein Luftfahrzeug, insbesondere für einen Helikopter, mit einem mehrblättrigen Heckrotor mit festem Blattanstellwinkel ausgestattet ist, wobei das Heckrotorsystem redundante Antriebseinheiten aufweist. Durch die Antriebseinheiten wird es möglich, die mechanische Kopplung des Heckrotors mit dem Hauptantrieb zu vermeiden. Dadurch ergibt sich der Vorteil, dass z.B. an einem Hubschrauber mit Haupt- und Heckrotor die Heckrotor-Abtriebswelle bzw. Heckrotor-Abtriebsvorrichtung am Hauptgetriebe, der Heckrotorwellenstrang mit Lagerung, ein Umlenkgetriebe im Heckrotorwellenstrang, der Heckrotorstellantrieb zusammen mit dem Positions-Kommando-Strang, die Heckrotor-Taumelscheibe sowie entsprechende bewegliche Teile zwischen Taumelscheibe und Heckrotorblättern entfallen. Durch die Einführung von redundanten Antriebseinheiten, die neben den eigentlichen Antriebseinheiten auch die zugehörigen Antriebsstränge umfassen können, wird eine Reduzierung der Komponenten-Kritikalität herbeigeführt. Durch die Redundanz wird die Betriebssicherheit des Luftfahrzeuges erhöht. Trotz Redundanz der Antriebseinheiten für das Heckrotorsystem kommt es in der Summe zu einer deutlichen Reduzierung des Hubschraubergewichtes, was sich positiv auf die Leistungsdaten des Hubschraubers auswirken kann. So kann beispielsweise der Hubschrauber durch den geringeren Verbrauch eine höhere Reichweite und/oder aufgrund der verbesserten Relation zwischen Leistung und Gewicht höhere Geschwindigkeiten und/oder Zuladung erreichen. Ein weiterer Vorteil besteht darin, dass der kontinuierliche mechanische Antrieb durch die bislang notwendige Kopplung an den Hauptantrieb entfällt, da der Heckrotor unabhängig von der Drehbewegung des Hauptrotors durch die Antriebseinheiten betrieben werden kann.

Des weiteren kann vorgesehen sein, dass die Antriebseinheiten mittels wenigstens einer elektrischen angetrieben sind. Diese Leistungsquelle kann in einem oder mehreren Generatoren bestehen.

Darüber hinaus ist es möglich, dass wenigstens eine Leistungsquelle mit dem Hauptantrieb des Luftfahrzeugs in Verbindung steht. Da jedoch vorteilhafterweise keine mechanische Ableitung vom Hauptantrieb des Luftfahrzeugs zum Heckrotor erfolgt, geht dies mit verringerten Leistungsverlusten einher. Dabei werden vorzugsweise ein oder mehrere Generatoren und/oder ein oder mehrere Hydraulikantriebe durch den Hauptantrieb mittelbar und/oder unmittelbar versorgt.

Erfindungsgemäß sind Steuerungs- und/oder Regelungsmittel vorgesehen, mittels derer die Antriebseinheiten hinsichtlich Drehzahl und/oder Drehrichtung steuerbar und/oder regelbar sind. Die Steuerungs- und/oder Regelungsmittel können dabei in einer zentralen Steuer- und Regelungseinheit für den Heckrotor bestehen bzw. eine derartige zentrale Steuer- und Regelungseinheit umfassen, zusammen mit weiteren Steuerungs- und/oder Regelungsmitteln. So kann insbesondere vorgesehen sein, dass die Steuerungs- und/oder Regelungsmittel ebenfalls redundant vorgesehen sind.
Besonders vorteilhaft ist es, wenn jeder Antriebseinheit gesonderte Steuerungs- und/oder Regelungsmittel zugeordnet sind. Hierdurch wird ein höherer Grad an Redundanz erreicht.

Des weiteren ist denkbar, dass die Steuerungs- und/oder Regelungsmittel mit der Zentralsteuerung und/oder -regelung des Luftfahrzeugs in Verbindung stehen. Bei der Zentralsteuerung kann es sich um den Flugkontrollrechner des Luftfahrzeugs handeln.

Ferner kann vorgesehen sein, dass die Steuerungs- und/oder Regelungsmittel mit Lageerfassungselementen und/oder mit Lenkungsmitteln des Luftfahrzeugs mittelbar und/oder unmittelbar in Verbindung stehen. Dabei können die Lageerfassungselemente Positionssensoren für die Giersteuerung umfassen oder als solche ausgeführt sein, wobei die Positionssensoren vorteilhafterweise mit dem Flugkontrollrechner, also der Zentralsteuerung und/oder -regelung des Luftfahrzeugs in Verbindung stehen. Die Lenkungsmittel können ein Giersteuerorgan wie Pedale und/oder einen Sidestick umfassen oder als solche ausgeführt sein. Dabei sind die Elemente des Giersteuerorgans vorteilhafterweise mit den Positionssensoren für die Giersteuerung und dem Flugkontrollrechner verbunden.

Von Vorteil ist es, wenn mittels der Steuerungs- und/oder Regelungsmittel im Zusammenwirken mit den Lageerfassungselementen und/oder den Lenkungsmitteln und/oder der Zentralsteuerung und/oder -regelung des Luftfahrzeugs der Heckrotor hinsichtlich Drehzahl und/oder Drehrichtung zur Giersteuerung und/oder -regelung, vorzugsweise automatisch, steuer- und/oder regelbar ist. Die automatische Steuerung und/oder Regelung der Gierbewegung des Luftfahrzeugs kann dabei beispielsweise durch den Flugkontrollrechner unter Berücksichtigung der vom Piloten vorgegebenen Lenkbewegungen durchgeführt werden, wodurch der Pilot entlastet wird. Hierdurch wird die Betriebssicherheit des Luftfahrzeuges weiter erhöht.

Des weiteren kann vorgesehen sein, dass mittels der Steuerungs- und/oder Regelungsmittel im Zusammenwirken mit den Lageerfassungselementen und/oder den Lenkungsmitteln und/oder der Zentralsteuerung und/oder -regelung des Luftfahrzeugs ein Signal ermittelbar ist, anhand dessen ablesbar ist, ob der Heckrotor zur Beeinflussung der Giersteuerung zu aktivieren ist, und wobei in Abhängigkeit von diesem Signal der Heckrotor aktivierbar und/oder deaktivierbar ist. Dadurch ergibt sich der Vorteil, dass Energie nur in dem Fall verbraucht wird, wenn dies auch zur Drehmomenterzeugung und damit zur Giersteuerung des Hubschraubers tatsächlich benötigt wird. Denn ab einer gewissen Vorwärtsgeschwindigkeit des Hubschraubers kann vorteilhafterweise die Stabilisierung des Luftfahrzeugs durch aerodynamische Effekte am Rumpf, z.B. durch Leitwerke und durch den Heckausleger erfolgen. Damit wird ein vom Heckrotor erzeugtes Drehmoment zur Giersteuerung überflüssig. Darüber hinaus ergibt sich der Vorteil, dass Lärmemissionen reduziert werden können, da der Heckrotor nur noch bei Bedarf zugeschaltet werden muss, nämlich in dem Fall, in dem der Drehmomentausgleich über den aerodynamischen Effekt hinausgeht. Weiterhin ist von Vorteil, dass der parasitäre oder induzierte Widerstand des Hubschraubers reduziert werden kann, da der Heckrotor nur betrieben wird, wenn dies tatsächlich zur Giersteuerung notwendig ist.

Es ist denkbar, dass der Heckrotor eine Welle aufweist, die zugleich Rotor der redundanten Antriebseinheiten ist. Von Vorteil kann dabei sein, wenn die vorzugsweise elektrischen Antriebseinheiten als Stator um die Welle z.B. nebeneinander angeordnet sind. Insbesondere ist von Vorteil, wenn sämtliche Komponenten des Heckrotorsystems mit Ausnahme der Heckrotorwelle redundant ausgeführt sind. Grundsätzlich kann vorgesehen sein, dass der Heckrotor in gekapselter oder offener Bauweise realisiert wird.

Des weiteren betrifft die Erfindung ein Verfahren zur Steuerung eines Heckrotorsystems eines Luftfahrzeuges, insbesondere eines Helikopters, mit den Merkmalen des Anspruchs 9. Danach ist vorgesehen, dass ein Verfahren zur Steuerung eines Heckrotorsystems eines Luftfahrzeuges, insbesondere eines Helikopters, mit einem mehrblättrigen Heckrotor mit festem Blattanstellwinkel derart durchgeführt wird, dass der Heckrotor redundant angetrieben wird.

Darüber hinaus kann vorgesehen sein, dass der Heckrotor bei Bedarf aktiviert wird und/oder durch Drehzahl und Drehrichtung des Heckrotors in Abhängigkeit von der Lage des Luftfahrzeugs und/oder in Abhängigkeit von den anliegenden Steuerbefehlen die Gierbewegung des Luftfahrzeugs, vorzugsweise automatisch, gesteuert und/oder geregelt wird. Von Vorteil ist insbesondere, dass der Heckrotor unabhängig von der Drehbewegung des Hauptrotors angesteuert und diskontinuierlich betrieben werden kann.

Erfindungsgemäß weist das Heckrotorsystem redundante Antriebseinheiten auf und es sind Steuerungs- und/oder Regelungsmittel vorgesehen, mittels derer die Antriebseinheiten hinsichtlich Drehzahl und/oder Drehrichtung gesteuert und/oder geregelt werden, Vorzugsweise kann bei Ausfall einer oder mehrerer Antriebseinheiten und/oder eines oder mehrerer Steuerungs- und/oder Regelungsmittels der Heckrotor durch die übrigen Antriebseinheiten weiterbetrieben werden. Dadurch kann vorteilhafterweise die Ausfallsicherheit des gesamten Heckrotorsystems erhöht werden, was insgesamt die Betriebssicherheit des Luftfahrzeugs erhöht.

Ferner ist denkbar, dass der Heckrotor bei einer flugdynamisch stabilen Lage des Luftfahrzeugs nicht angetrieben wird. Hierdurch lässt sich die Effizienz des Luftfahrzeugs steigern. Ferner wird die Lärmentwicklung des Heckrotorsystems wesentlich verringert, da dieser nur bei Bedarf zugeschaltet wird.

Bevorzugt wird es, wenn das Verfahren zur Steuerung eines Heckrotorsystems mit einem Heckrotorsystem nach einem der Ansprüche 1 bis 8 durchgeführt wird.

Weitere Einzelheiten und Vorteile der Erfindung sollen nun anhand eines in der Zeichnung dargestellten Ausführungsbeispiels näher erläutert werden. Es zeigen:
- Fig. 1:: eine schematische Ansicht eines Luftfahrzeugs in Seitenansicht,
- Fig. 2:: eine schematische Ansicht des Heckauslegers eines Luftfahrzeugs mit Heckrotor in Seitenansicht und
- Fig. 3:: eine schematische Detailansicht des Heckrotors.

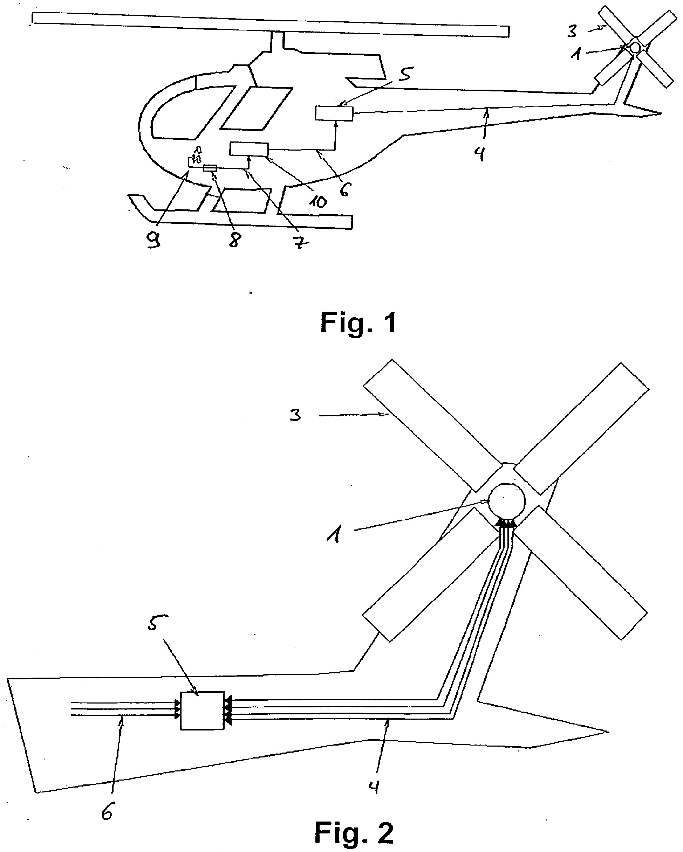

Fig. 1 zeigt in schematischer Seitenansicht einen Helikopter mit erfindungsgemäßem Heckrotorsystem. Dabei ist ein mehrblättriger Heckrotor 3 mit festem Blattanstellwinkel vorgesehen. Im in Fig. 1 gezeigten Fall mit vier symmetrisch angeordneten Heckrotorblättern. Dabei verfügt das in Fig. 1 gezeigte Heckrotorsystem über mehrere redundante Antriebseinheiten, die als multiredundante Elektro- oder Hydraulikmotoren ausgeführt sind.

Der Helikopter verfügt über ein Giersteuerungsorgan 9, das wahlweise als Pedale oder auch als Sidestick ausgeführt sein kann. Ferner sind Positionssensoren vorgesehen, die die Lage der Steuerorgane erfassen und ein Signal für das gewünschte Giersteuermoment erzeugen. Das Giersteuerorgan 9 ist über die Positionssensoren für die Giersteuerorganposition mittels vorzugsweise redundant ausgeführter Signalleitungen mit dem Flugkontrollrechner verbunden. Dem Flugkontrollrechner werden dabei die Signale 7 der Giersteuerungsorganposition übermittelt.

Das Heckrotorsystem weist eine redundante Steuer- und Regelungseinheit 5 auf, die mittels multiredundanter Energieversorgung und Steuerleitung 4 mit den Antriebseinheiten 1 des Heckrotors 3 in Verbindung steht. Ferner ist die Steuer- und Regelungseinheit 5 über eine multiredundante Leistungs- und Signalversorgung mit dem Flugkontrollrechner 10 über die Leitung 6 verbunden. Dabei ist die Leitung 6 vorteilhafterweise als multiredundantes Leitungsbündel ausgeführt.

Fig. 2 zeigt eine abgewandelte Anordnung der Steuer- und Regelungseinheit 5, die anstelle der Unterbringung in der eigentlichen Helikopterkabine nunmehr im hinteren Teil des Heckauslegers, der auch den offenen Heckrotor 3 trägt, angeordnet ist. Die Leistungs- und Signalversorgung vom Hauptantrieb des Hubschraubers sowie vom Flugkontrollrechner 10 über die Leitungen 6 erfolgt multiredundant, genauso wie die Weiterleitung von der Steuer- und Regelungseinheit 5 an die Antriebseinheiten 1 mittels der Versorgungs- und/oder Steuerleitungen 4. Grundsätzlich kann vorgesehen sein, dass die Steuer- und Regelungseinheit 5 redundant ausgeführt ist. Dabei kann in einem einzelnen Gehäuse einer Steuer- und Regelungseinheit 5 Komponentenredundanz vorliegen. Es können jedoch ebenso mehrere redundant und räumlich voneinander getrennt angeordnete Steuer- und Regelungseinheiten 5 vorgesehen sein.

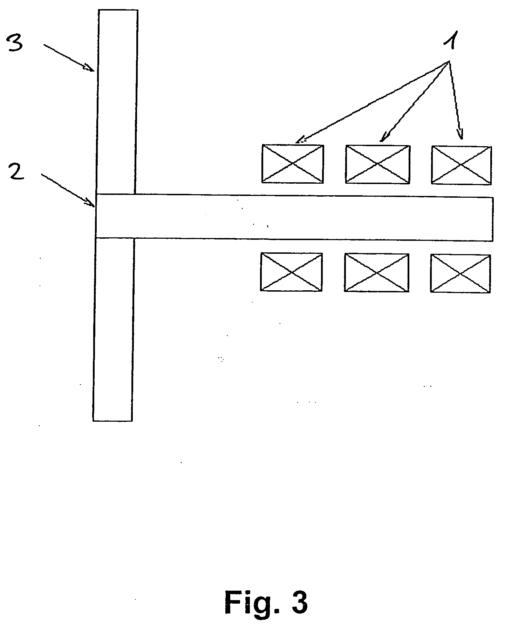

Fig. 3 zeigt redundant um die gemeinsame Welle 2 angeordnete multiredundante Elektromotoren 1, die den Heckrotor 3 antreiben. Dabei dient die Welle 2 zugleich als Rotor der multiredundanten Antriebseinheiten 1. Grundsätzlich kann vorgesehen sein, dass anstelle oder zusätzlich zu den Elektromotoren 1 Hydraulikmotoren 1 eingesetzt werden. Durch die kombinierte Verwendung unterschiedlicher Antriebsarten kann die Redundanz des Systems erhöht werden.

## Patentansprüche

1. Heckrotorsystem für ein Luftfahrzeug, insbesondere für einen Helikopter, mit einem mehrblättrigen Heckrotor (3) mit festem Blattanstellwinkel,
**dadurch gekennzeichnet,**
**dass** das Heckrotorsystem redundante Antriebseinheiten (1) mit Steuerungs- und/oder Regelungsmittel (5) aufweist, die als Einheit sowohl die Gierschuberzeugung als auch die Gierschubkontrolle vereinigt, wobei mittels der Steuerungs- und/oder Regelungsmittel (5) die Antriebseinheiten (1) hinsichtlich Drehzahl steuerbar und/oder regelbar sind, und wobei die Antriebseinheiten (1) redundante Elektromotoren (1) umfassen.

2. Heckrotorsystem nach Anspruch 1, **dadurch gekennzeichnet, dass** die Antriebseinheiten (1) mittels wenigstens einer elektrischen Leistungsquelle angetrieben sind.

3. Heckrotorsystem nach Anspruch 2, **dadurch gekennzeichnet, dass** die wenigstens eine Leistungsquelle mit dem Hauptantrieb des Luftfahrzeugs in Verbindung steht.

4. Heckrotorsystem nach einem der vorhergehenden Ansprüche, **dadurch gekennzeichnet, dass** die Steuerungs- und/oder Regelungsmittel (5) mit der Zentralsteuerung und/oder -regelung (10) des Luftfahrzeugs in Verbindung stehen.

5. Heckrotorsystem nach einem der vorhergehenden Ansprüche, **dadurch gekennzeichnet, dass** die Steuerungs- und/oder Regelungsmittel (5) mit Positionserfassungselementen (8) und/oder mit Lenkungsmitteln (9) des Luftfahrzeugs mittelbar und/oder unmittelbar in Verbindung stehen.

6. Heckrotorsystem nach einem der vorhergehenden Ansprüche, **dadurch gekennzeichnet, dass** mittels der Steuerungs- und/oder Regelungsmittel (5) im Zusammenwirken mit den Positionserfassungselementen (8) und/oder den Lenkungsmitteln (9) und/oder der Zentralsteuerung (10) und/oder -regelung des Luftfahrzeugs der Heckrotor (3) hinsichtlich Drehzahl und/oder Drehrichtung zur Giersteuerung und/oder -regelung, vorzugsweise automatisch, steuer- und/oder regelbar ist.

7. Heckrotorsystem nach einem der vorhergehenden Ansprüche, **dadurch gekennzeichnet, dass** mittels der Steuerungs- und/oder Regelungsmittel (5) im Zusammenwirken mit den Positionserfassungselementen (8) und/oder den Lenkungsmitteln (9) und/oder der Zentralsteuerung (10) und/oder -regelung des Luftfahrzeugs ein Signal ermittelbar ist, anhand dessen ablesbar ist, ob der Heckrotor (3) zur Beeinflussung der Giersteuerung zu aktivieren ist, und wobei in Abhängigkeit von diesem Signal der Heckrotor (3) aktivierbar und/oder deaktivierbar ist.

8. Heckrotorsystem nach einem der vorhergehenden Ansprüche, **dadurch gekennzeichnet, dass** der Heckrotor (3) eine Welle (4) aufweist, die zugleich Rotor der redundanten Antriebseinheiten (1) ist, oder mit dieser in Verbindung steht.

9. Verfahren zur Steuerung eines Heckrotorsystems für ein Luftfahrzeug, insbesondere für einen Helikopter, mit einem mehrblättrigen Heckrotor (3) mit festem Blattanstellwinkel, sowie mit redundanten Antriebseinheiten (1) und Steuerungs- und/oder Regelungsmitteln (5),
**dadurch gekennzeichnet,**
**dass** mittels der Steuerungs- und/oder Regelungsmittel (5) die Antriebseinheiten (1) hinsichtlich Drehzahl und/oder Drehrichtung gesteuert und/oder geregelt werden.

10. Verfahren zur Steuerung eines Heckrotorsystems nach Anspruch 9, **dadurch gekennzeichnet, dass** der Heckrotor (3) bei Bedarf aktiviert wird und/oder durch Drehzahl und Drehrichtung des Heckrotors (3) in Abhängigkeit von der Lage des Luftfahrzeugs und/oder in Abhängigkeit von den anliegenden Steuerbefehlen die Gierbewegung des Luftfahrzeugs, vorzugsweise automatisch, gesteuert und/oder geregelt wird.

11. Verfahren zur Steuerung eines Heckrotorsystems nach Anspruch 9 oder 10, **dadurch gekennzeichnet, dass** bei Ausfall einer oder mehrerer Antriebseinheiten (1) und/oder eines oder mehrerer Steuerungs- und/oder Regelungsmittel (5) der Heckrotor (3) durch die übrigen Antriebseinheiten (1) weiterbetrieben werden kann.

12. Verfahren zur Steuerung eines Heckrotorsystems nach einem der Ansprüche 9 bis 11, **dadurch gekennzeichnet, dass** der Heckrotor (3) bei einer flugdynamisch stabilen Lage des Luftfahrzeugs nicht angetrieben wird.

13. Verfahren zur Steuerung eines Heckrotorsystems nach einem der Ansprüche 9 bis 12, **dadurch gekennzeichnet, dass** es sich um ein Heckrotorsystem nach einem der Ansprüche 1 bis 8 handelt.

## Claims

1. A tail rotor system for an aircraft, in particular for a helicopter, with a multi-blade tail rotor (3) with a fixed blade angle of attack,
**characterized in**
**that** the tail rotor system includes redundant drive units (1) with control and/or regulating means (5), which combine both yaw thrust generation and yaw thrust control in one unit, wherein by means of the control and/or regulating means (5) the drive units (1) can be controlled and/or regulated in terms of rotational speed, and wherein the drive units (1) comprise redundant electric motors (1).

2. The tail rotor system according to claim 1, **characterized in that** the drive units (1) are driven by means of at least one electric power source.

3. The tail rotor system according to claim 2, **characterized in that** the at least one power source is connected with the main drive of the aircraft.

4. The tail rotor system according to any of the preceding claims, **characterized in that** the control and/or regulating means (5) are connected with the central control and/or regulation (10) of the aircraft.

5. The tail rotor system according to any of the preceding claims, **characterized in that** the control and/or regulating means (5) are directly and/or indirectly connected with position detecting elements (8) and/or with steering means (9) of the aircraft.

6. The tail rotor system according to any of the preceding claims, **characterized in that** by means of the control and/or regulating means (5) in cooperation with the position detecting elements (8) and/or the steering means (9) and/or the central control and/or regulation (10) of the aircraft the tail rotor (3) can be controlled and/or regulated, preferably automatically, in terms of rotational speed and/or direction of rotation for yaw control and/or regulation.

7. The tail rotor system according to any of the preceding claims, **characterized in that** by means of the control and/or regulating means (5) in cooperation with the position detecting elements (8) and/or the steering means (9) and/or the central control and/or regulation (10) of the aircraft a signal can be determined, by means of which it can be read off whether the tail rotor (3) must be activated for influencing the yaw control, and wherein in dependence on this signal the tail rotor (3) can be activated and/or deactivated.

8. The tail rotor system according to any of the preceding claims, **characterized in that** the tail rotor (3) includes a shaft (4) which also is the rotor of the redundant drive units (1) or is connected with the same.

9. A method for controlling a tail rotor system for an aircraft, in particular for a helicopter, with a multi-blade tail rotor (3) with fixed blade angle of attack, and with redundant drive units (1) and control and/or regulating means (5),
**characterized in**
**that** by means of the control and/or regulating means (5) the drive units (1) are controlled and/or regulated in terms of rotational speed and/or direction of rotation.

10. The method for controlling a tail rotor system according to claim 9, **characterized in that** the tail rotor (3) is activated if necessary and/or the yaw movement of the aircraft is controlled and/or regulated, preferably automatically, by the rotational speed and direction of rotation of the tail rotor (3) in dependence on the position of the aircraft and/or in dependence on the existing control commands.

11. The method for controlling a tail rotor system according to claim 9 or 10, **characterized in that** upon failure of one or more drive units (1) and/or one or more control and/or regulating means (5) the tail rotor (3) can be operated further by the remaining drive units (1).

12. The method for controlling a tail rotor system according to any of claims 9 to 11, **characterized in that** the tail rotor (3) is not driven in a flight-dynamically stable position of the aircraft.

13. The method for controlling a tail rotor system according to any of claims 9 to 12, **characterized in that** it is a tail rotor system according to any of claims 1 to 8.

## Revendications

1. Système de rotor de queue pour aéronef, en particulier pour un hélicoptère, comportant un rotor de queue (3) à plusieurs pales avec angle fixe de pas de pales,
**caractérisé en ce que**
le système de rotor de queue présente des unités d'entraînement (1) redondantes avec des moyens de commande et/ou de réglage (5) qui, en tant qu'unité, réunit non seulement la production de poussée de lacets, mais aussi le contrôle de poussée de lacets, les unités d'entraînement (1) étant susceptibles d'être commandées et/ou réglées au moyen des moyens de commande et/ou de réglage (5), et les unités d'entraînement (1) comprenant des moteurs électriques (1) redondants.

2. Système de rotor de queue selon la revendication 1, **caractérisé en ce que** les unités d'entraînement (1) sont entraînées par au moins une source de puissance électrique.

3. Système de rotor de queue selon la revendication 2, **caractérisé en ce que** ladite au moins une source de puissance est en liaison avec l'entraînement principal de l'aéronef.

4. Système de rotor de queue selon l'une des revendications précédentes, **caractérisé en ce que** les moyens de commande et/ou de réglage (5) sont en liaison avec la commande centrale et/ou le réglage central (10) de l'aéronef.

5. Système de rotor de queue selon l'une des revendications précédentes, **caractérisé en ce que** les moyens de commande et/ou de réglage (5) sont indirectement et/ou directement en liaison avec des éléments de détection de position (8) et/ou avec des moyens de direction (9) de l'aéronef.

6. Système de rotor de queue selon l'une des revendications précédentes, **caractérisé en ce qu'**au moyen des moyens de commande et/ou de réglage (5) en coopération avec les éléments de détection de position (8) et/ou les éléments de direction (9), et/ou la commande centrale (10) et/ou le réglage central de l'aéronef, le rotor de queue (3) peut être commandé et/ou réglé, de préférence automatiquement, pour la commande et/ou réglage du lacet, en ce qui concerne la vitesse et/ou le sens de rotation.

7. Système de rotor de queue selon l'une des revendications précédentes, **caractérisé en ce qu'**au moyen des moyens de commande et/ou de réglage (5) en coopération avec les éléments de détection de position (8) et/ou les éléments de direction (9), et/ou la commande centrale (10) et/ou le réglage central de l'aéronef, on peut déterminer un signal qui permet de lire si le rotor de queue (3) doit être activé pour influencer la commande du lacet, et en fonction de ce signal, le rotor de queue (3) peut être activé et/ou désactivé.

8. Système de rotor de queue selon l'une des revendications précédentes, **caractérisé en ce que** le rotor de queue (3) présente un arbre (4) qui est en même temps le rotor des unités d'entraînement redondantes (1) ou qui est en liaison avec celles-ci.

9. Procédé de commande d'un système de rotor de queue pour un aéronef, en particulier pour un hélicoptère, comportant un rotor de queue (3) à plusieurs pales avec angle fixe de pas de pales, ainsi que des unités d'entraînement (1) redondantes et des moyens de commande et/ou de réglage (5),
**caractérisé en ce que**
au moyen des moyens de commande et/ou de réglage (5), les unités d'entraînement (1) sont commandées et/ou réglées en ce qui concerne la vitesse et/ou ou le sens de rotation.

10. Procédé de commande d'un système de rotor de queue selon la revendication 9, **caractérisé en ce que** le rotor de queue (3) est activé en cas de besoin et/ou le mouvement de lacet de l'aéronef est commandé et/ou réglé, de préférence automatiquement, par la vitesse et le sens de rotation du rotor de queue (3) en fonction de la position de l'aéronef et/ou en fonction des instructions de commande.

11. Procédé de commande d'un système de rotor de queue selon la revendication 9 ou 10, **caractérisé en ce qu'**en cas de défaillance d'une ou de plusieurs unités d'entraînement (1) et/ou d'un ou de plusieurs moyens de commande et/ou de réglage (5), le rotor de queue (3) peut continuer à fonctionner grâce aux unités d'entraînement (1) restantes.

12. Procédé de commande d'un système de rotor de queue selon l'une des revendications 9 à 11, **caractérisé en ce que** le rotor de queue (3) n'est pas entraîné en cas de position dynamique de vol stable de l'aéronef.

13. Procédé de commande d'un système de rotor de queue selon l'une des revendications 9 à 12, **caractérisé en ce qu'**il s'agit d'un système de rotor de queue selon l'une des revendications 1 à 8.
